# DEMANDE DE BREVET EUROPEEN

(11) **EP 2 606 787 A1**
(43) Date de publication de la demande: **26.06.2013**
(21) Numéro de dépôt: 12196487.8
(22) Date de dépôt: 11.12.2012
(51) Int. Cl.: A47J 37/06

(54) **Appareil de cuisson double face avec plaques de chauffe thermiquement protégées**

(30) Priorité: 21.12.2011 FR 1162234
(71) Demandeur: SEB SA, 69130 Ecully (FR)
(72) Inventeur: Prieto, Guillaume, 21380 Marsannay le Bois (FR); Besson, Jean-Christophe, 74600 Seynod (FR); Excoffier, Dominique, 74150 Rumilly (FR)
(74) Mandataire: Novagraaf Technologies

(57) **Abrégé**

La présente invention concerne un appareil de cuisson comprenant des sous-ensembles respectivement inférieur et supérieur et comprenant respectivement une structure inférieure (3b) et au moins une plaque de chauffe inférieure (2b) qui en est amovible, la plaque de chauffe inférieure étant liée à une poignée (4), et une structure supérieure (3a) et une plaque de chauffe supérieure (2a) fixée à elle. La poignée (4) comprend un manche (5) en un matériau isolant thermique.

## Description

La présente invention concerne un appareil de cuisson double face du type comprenant deux plaques de cuisson électriques disposées face à face dans deux structures reliées l'une à l'autre par une charnière.

Il s'agit plus précisément, comme connu en soi, d'un appareil de cuisson comprenant des sous-ensembles respectivement inférieur et supérieur, articulés ensemble et comprenant respectivement :
- une structure inférieure et au moins une plaque de chauffe inférieure qui en est amovible et qui comprend une poignée de préhension,
- une structure supérieure et une plaque de chauffe supérieure fixée à elle,
- une chambre de cuisson pour l'aliment, définie entre les plaques de chauffe supérieure et inférieure.

Notamment les gaufriers, appareils de cuisson pour croques monsieur, sandwich et les gril-viandes sont concernés.

Les sous-ensembles inférieur et supérieur seront typiquement articulés ensemble entre une position fermée, où la chambre de cuisson est fermée, et une position ouverte permettant d'y introduire l'aliment.

EP 1 867 263 et GB 960721 divulguent un appareil de cuisson de l'art antérieur.

Cependant, les plaques de chauffe, ou cuisson, amovibles divulguées dans ces documents ne permettent pas à l'utilisateur d'utiliser l'appareil avec un maximum de sécurité.

Manipuler facilement la plaque de chauffe amovible, surtout lorsqu'elle est chaude, n'est pas aisé. Dans EP 1 867 263, l'utilisateur doit utiliser un accessoire du type pince ou chiffon pour saisir cette plaque. Dans GB 960721, la poignée en forme de L est plutôt adaptée à être utilisée comme butée que comme moyen de préhension. Dans ces deux cas, l'utilisateur ne peut ainsi pas se servir directement et facilement l'aliment cuit dans son assiette.

L'invention vise à remédier à une partie au moins de ces inconvénients.

L'appareil de l'invention se caractérise à cette fin en ce que la poignée comprend un manche en un matériau isolant thermique.

Selon une autre caractéristique, il est conseillé :
- que la plaque de chauffe inférieure s'étende globalement dans un plan et que la poignée soit droite et s'étende sensiblement dans ledit plan, perpendiculairement à la direction de l'articulation entre lesdits sous-ensembles, et/ou
- que la plaque de chauffe inférieure s'étende globalement dans un plan et que la projection de la poignée dans ce plan soit allongée dans une direction suivant laquelle on s'éloigne de la plaque au fur et à mesure qu'on se rapproche de l'extrémité libre de cette poignée.

Ainsi, on s'éloignera des sources de chaleur situées dans les structures inférieure et supérieure.

On conseille par ailleurs que chaque poignée comprenne une patte de liaison reliant de façon monobloc le manche à la plaque de chauffe inférieure, la patte de liaison s'étendant sensiblement dans le plan de la plaque de chauffe inférieure.

Même effet que précédemment.

De préférence, on prévoira en outre que l'appareil comprenne un dispositif de verrouillage libérable établi entre la ou l'une au moins des plaques de chauffe inférieures et la structure inférieure et comprenant une partie fixe et une partie mobile, de façon à devoir libérer ladite plaque de chauffe verrouillée avant de pouvoir la retirer de l'appareil (en la déplaçant).

Ainsi, l'invention permettra de sécuriser la/chaque plaque de chauffe amovible tant dans sa coopération avec la structure, ici inférieure, qui la reçoit que dans son retrait pour service.

Allier praticité à sécurité est visé.

Dans le cadre précédent et sur ce point, il est proposé que les sous-ensembles respectivement inférieur et supérieur soient articulés ensemble entre une position fermée, où ils définissent entre eux une chambre de cuisson pour l'aliment, et une position ouverte dans laquelle ils offrent une ouverture vers le haut à partir du sous-ensemble inférieur par où la ou les plaques de chauffe inférieures peuvent être retirées de l'appareil en étant soulevées et introduites dans celui-ci en étant abaissée vers ledit sous-ensemble inférieur.

On recommande par ailleurs que le verrouillage libérable établi entre la plaque de chauffe inférieure concernée et la structure inférieure s'opère par un mouvement de descente de la plaque de chauffe vers la structure inférieure.

Notamment dans ce cadre, on recommande en outre d'ailleurs que la partie mobile du dispositif de verrouillage comprenne un poussoir disposé sous ladite plaque de chauffe inférieure et qui la pousse vers le haut.

Un problème peut aussi surgir si la protection assurée par le manche est altérée. Aussi est-il proposé que le manche soit amovible de la patte de liaison et comprenne un dispositif de verrouillage coopérant avec ladite patte de liaison de façon à permettre le verrouillage du manche sur la patte, et son déverrouillage.

Eviter ou limiter un débordement permet aussi d'allier praticité à sécurité.

Ainsi, est-il conseillé que chaque plaque de chauffe inférieure présente une face supérieure comprenant une bordure périphérique présentant au moins une partie de bordure plus haute que le reste de la bordure, ladite partie de bordure plus haute s'étendant le long d'un côté de jonction de la plaque de chauffe inférieure, ledit côté de jonction étant le côté de la plaque de chauffe inférieure qui est destiné à être positionné au voisinage d'un autre côté de jonction de l'autre ou d'une autre dite plaque de chauffe inférieure, lorsque les plaques de chauffe inférieures sont posées sur la structure inférieure.

D'une manière comparable, il est proposé que chaque plaque de chauffe inférieure présente une face supérieure comprenant une zone de cuisson d'aliment entourée par une bordure périphérique qui se dresse au-dessus du niveau de ladite zone, ceci sur les côtés autres que celui auquel la poignée se raccorde où ladite bordure périphérique se prolonge par des amorces latérales de parois dressées, de façon à définir, dans une position fermée de l'appareil, des chicanes, en liaison avec une partie au moins d'une bordure périphérique de la (chaque) plaque de chauffe supérieure et/ou d'une cloison saillante séparant en sous-parties la plaque de chauffe supérieure, de sorte à assurer alors une étanchéité vis-à-vis de l'aliment placé dans la zone de cuisson.

A titre alternatif ou complémentaire, il est proposé que chaque plaque de chauffe inférieure présente une face supérieure comprenant une bordure périphérique qui, sur au moins les côtés autres que celui auquel la poignée se raccorde, s'engage à l'intérieur du creux de la (des) plaque(s) de chauffe supérieure(s), dans une position fermée de l'appareil dans laquelle ledit côté de chaque plaque de chauffe inférieure auquel la poignée se raccorde reçoit alors une partie d'une bordure périphérique de la (chaque) plaque de chauffe supérieure de sorte à assurer alors une étanchéité vis-à-vis d'un aliment placé dans l'une au moins des plaques de chauffe inférieures.

A nouveau pour allier praticité et sécurité, on conseille que l'appareil comprenne un dispositif d'éjection de la ou de l'une au moins des plaques de chauffe inférieures, adapté à écarter cette plaque de la structure inférieure, lorsque le dispositif de verrouillage est libéré.

On facilite ainsi la manoeuvre de la plaque.

On recommande par ailleurs, dans le même cadre, que le verrouillage libérable établi entre la plaque de chauffe inférieure concernée et la structure inférieure s'opère par un mouvement de descente de la plaque de chauffe vers la structure inférieure.

Egalement dans le même cadre, on recommande:
- que des éléments chauffants disposés à proximité de thermostats soient adaptés à chauffer les plaques de chauffe supérieure et inférieures,
- et que l'un au moins des thermostats soit soumis à l'action d'un poussoir qui l'applique contre l'une des plaques de chauffe inférieures.

Pour faciliter par ailleurs l'intégration la plaque de chauffe inférieure, lors de la cuisson, on recommande aussi que l'appareil comprenne une paroi avant comportant deux logements sur sa face supérieure, chaque logement étant adapté à recevoir la patte de liaison d'une des plaques de chauffe inférieure.

D'autres aspects inventifs, particularités et avantages apparaîtront dans la description qui suit, qui est présentée à titre d'exemple non limitatif et fait référence à des dessins où :
- la figure 1 représente une vue en perspective d'un appareil de cuisson selon un mode de réalisation possible de l'invention ;
- la figure 2 représente une vue en perspective d'une plaque de chauffe amovible munie d'un manche amovible selon un mode de réalisation possible de l'invention ;
- la figure 3 représente une vue en perspective de cette plaque de chauffe amovible avec le manche extrait de la plaque ;
- la figure 4 représente une vue latérale en coupe de cette plaque de chauffe amovible lorsque le dispositif de verrouillage est en position de verrouillage ;
- la figure 5 représente une vue latérale en coupe de cette plaque de chauffe amovible lorsque le dispositif de verrouillage est en position de déverrouillage ;
- la figure 6 représente une vue en perspective d'un appareil de cuisson en position ouverte sans les plaques de chauffe inférieure et supérieure, selon un mode de réalisation possible de l'invention ;
- la figure 7 représente une vue en coupe transversale de l'appareil de cuisson en position fermé dans un plan proche du côté avant de l'appareil de cuisson et parallèle à l'axe d'articulation ;
- la figure 8 représente le détail de la gorge de récupération au fond de l'structure inférieure de l'appareil de cuisson, selon la coupe de la figure 7 ;
- la figure 9 représente schématiquement un exemple de plaque de chauffe muni d'une poignée allongée droite et s'étendant dans le plan de la plaque de chauffe ;
- la figure 10 représente schématiquement un autre exemple de plaque de chauffe muni d'une poignée allongée comprenant une partie inclinée par rapport au plan de la plaque de chauffe ;
- la figure 11 est une alternative de la figure 2,
- les figures 12,13 montrent un dispositif de verrouillage libérable pour verrouiller ou non une plaque de chauffe (ici inférieure) vis-à-vis de la structure de l'appareil (ici la structure inférieure) ; la figure 14 montre une solution alternative,
- les figures 15,16 montrent une solution anti-débordement ; la figure 16 est un détail de la figure 15,
- et les figures 17,18 montrent en particulier un thermostat associé à plaque de chauffe inférieure, pour servir à la fois de capteur et de poussoir, via ici un ressort, pour faciliter le retrait de cette plaque si elle a été déverrouillée via le dispositif de verrouillage libérable.

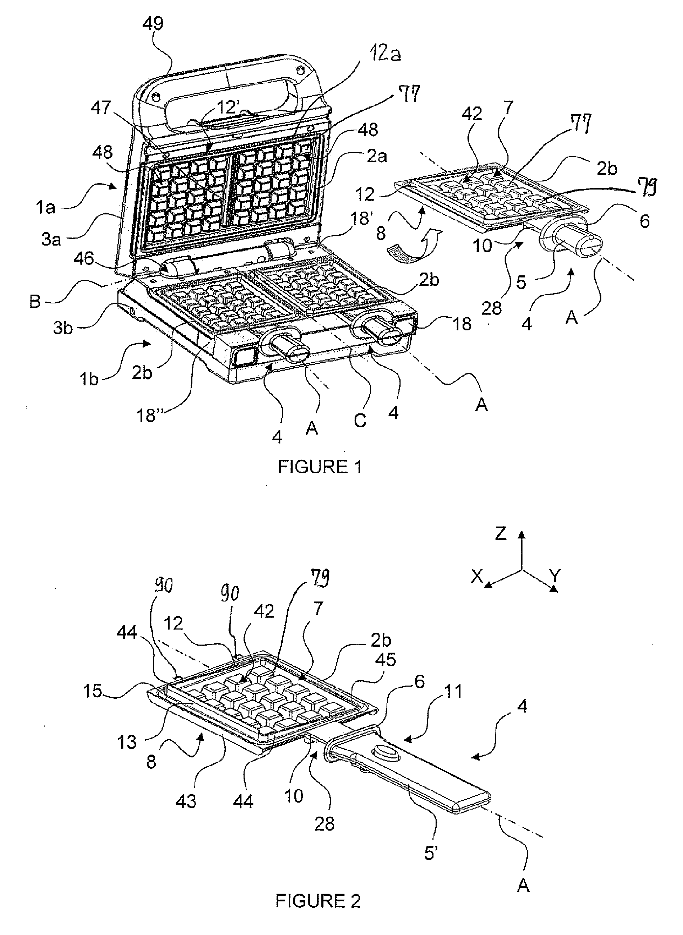

Les figures 1 à 10 représentent un gaufrier et des plaques de chauffe 2a, 2b pour gaufrier à titre d'exemple. Les plaques de chauffe 2a, 2b représentées dans cet exemple sont munies d'empreintes adaptées au moulage et à la cuisson de gaufres. Elles peuvent présenter d'autres formes adaptées à d'autres utilisations. Les plaques 2a, 2b peuvent ne pas comprendre d'empreintes.

La figure 1, l'appareil comprend un sous-ensemble chauffant supérieur 1a, et un sous-ensemble inférieur 1b articulés l'un par rapport à l'autre, selon un axe B, entre une position ouverte, et une position fermée. Le sous-ensemble chauffant supérieur 1a, et le sous-ensemble inférieur 1b sont articulés au moyen d'un arbre d'articulation 46.

Le sous-ensemble chauffant supérieur 1a comprend une structure supérieure 3a, et au moins une plaque de chauffe supérieure 2a. Dans l'exemple, le sous-ensemble 1a comprend une seule plaque de chauffe 2a munie de deux empreintes.

Le sous-ensemble inférieur 1b comprend une structure inférieure 3b et ici au moins deux plaques de chauffe inférieures 2b. En position fermée, les plaque de chauffe supérieures 2a et inférieures 2b définissent entre elles une chambre de cuisson 26 pour aliments.

Les structures supérieure 3a et inférieure 3b peuvent être des coques isolantes et résistantes à la chaleur, supportant les plaques de chauffe et recevant des chauffages électriques 23a, 23b et 23c nécessaires à la cuisson de l'aliment considéré.

Les plaques de chauffe inférieures 2b sont amovibles de la structure inférieure 3b. Ces plaques 2b amovibles comprennent chacune une poignée 4 pour leur préhension. Lorsque l'appareil de cuisson est ouvert, les plaques de chauffe inférieures 2b amovibles peuvent être directement posées sur la structure inférieure 3b ou soulevées pour en être retirées.

Chaque plaque de chauffe comprend aussi une zone de cuisson 42 destinée à recevoir l'aliment. Cette zone est pleine et permet une cuisson de l'aliment par contact et conduction, ici via les résistances 24a....

L'amovibilité des plaques de chauffe inférieures permet d'utiliser plusieurs jeux différents avec un seul appareil de cuisson. Ainsi, la zone de cuisson 42 peut présenter des formes différentes (avec ou sans empreintes...).

La poignée 4 présente ici une forme allongée. La projection de cette poignée dans le plan de la plaque de chauffe inférieure 2b est allongée et s'éloigne de la plaque au fur et à mesure qu'on se rapproche de son extrémité libre. Dit autrement, la poignée de préhension 4 est allongée et s'éloigne d'un plan perpendiculaire au plan de la plaque passant par cette dernière au fur et à mesure qu'on se rapproche de son extrémité libre. La poignée peut présenter plusieurs formes possibles à l'exclusion d'une forme en L ou en T.

Ceci facilite la préhension de la plaque par l'utilisateur qui peut saisir la poignée directement et retourner la plaque pour servir dans une assiette.

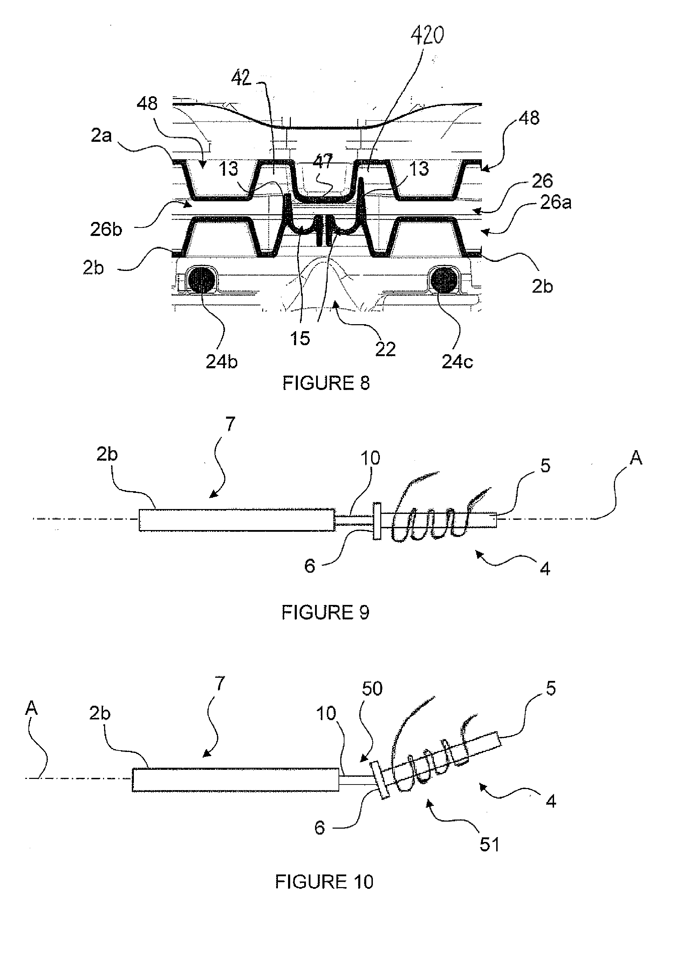

De préférence, la poignée 4 est droite, comme illustrée sur la figure 9. Elle s'étend sensiblement dans le plan de la plaque de chauffe inférieure 2b qui est parallèle au plan (X, Y). La poignée de préhension 4 est suffisamment étendue de façon à permettre sa préhension avec au moins le pouce, l'index et le majeur de l'utilisateur. De préférence, la poignée 4 est suffisamment allongée de façon à permettre sa préhension avec toute la main de l'utilisateur, comme illustrée sur les figures 9 et 10. La figure 10 représente schématiquement une plaque de chauffe 2b avec une poignée allongée comprenant une partie dans le plan de la plaque 50 et une partie inclinée 51 par rapport au plan de la plaque de chauffe. La poignée s'étend depuis la plaque de chauffe jusqu'à son extrémité libre sur une distance d'au moins 3,5 cm.

La poignée 4 est sensiblement perpendiculaire à l'un des côtés de la plaque inférieure 2b. Plus précisément, elle est perpendiculaire au côté par lequel elle est reliée à la plaque. La poignée 4 s'étend depuis ce côté selon l'axe longitudinal A et selon la direction Y.

La poignée 4 peut comprendre un manche 5, 5' en un matériau isolant thermique.

Chaque poignée 4 peut comprendre une patte de liaison 10 reliant le manche à la plaque 2b. La patte 10 peut s'étendre sensiblement dans le plan de la plaque inférieure 2b, qui est parallèle au plan (X, Y).

Dans l'exemple de la figure 1, le manche 5, 5' est un manche fixe 5, fixé à la patte 10 de manière permanente. Le manche fixe 5 recouvre l'extrémité de la 10. La portion de patte 28 non recouverte.

Le manche 5, 5' peut comprendre une garde de protection 6. La garde 6 permet d'empêcher l'utilisateur de se brûler.

De préférence, la plaque de chauffe amovible 2b et la structure inférieure 3b coopèrent via un dispositif de verrouillage libérable (donc déverrouillable)60 permettant d'immobiliser de façon réversible la plaque sur cette structure 3b.

Selon un mode de réalisation favorable, la poignée 4 peut comprendre une partie de ce dispositif 60. L'autre partie est sur la structure 3b.

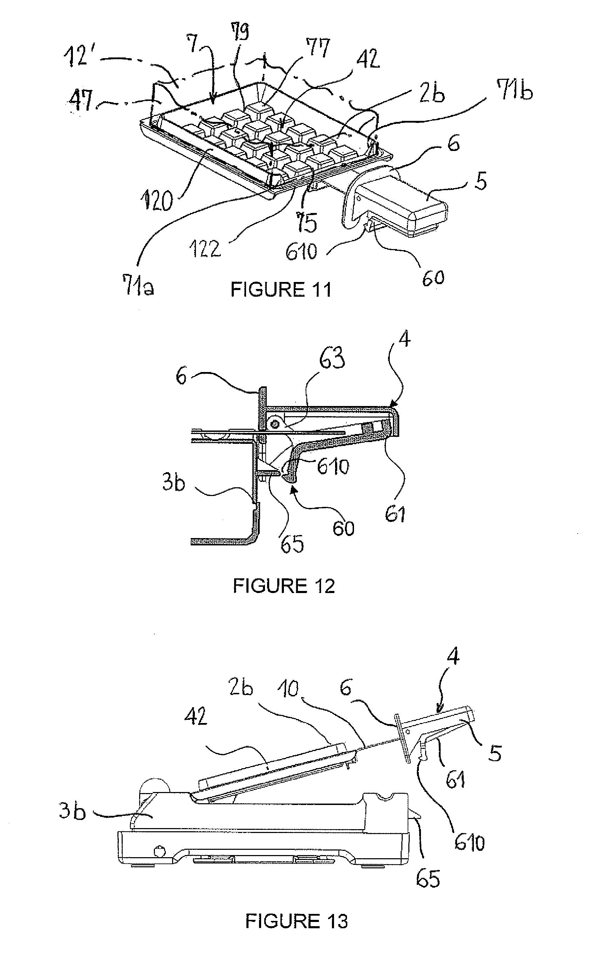

Figures 11-13, le dispositif de verrouillage libérable 60 comprend une gâchette 61 dont le mouvement est contrôlé par un moyen de rappel, tel un ressort, 63. La gâchette peut, suivant sa position être bloquée ou débloquée vis-à-vis d'une patte de retenue 65 de la structure 3b. Dans l'exemple préféré, la gâchette 61 et le ressort 63 sont prévus sur la poignée 4. Ici, la gâchette 61 est pivotante. En position bloquée, un crochet 610 de cette gâchette s'engage sous la patte de retenue 65, comme on le comprend au vu de la figure 12. Le ressort 63 rappelle la patte 65 vers la position bloquée.

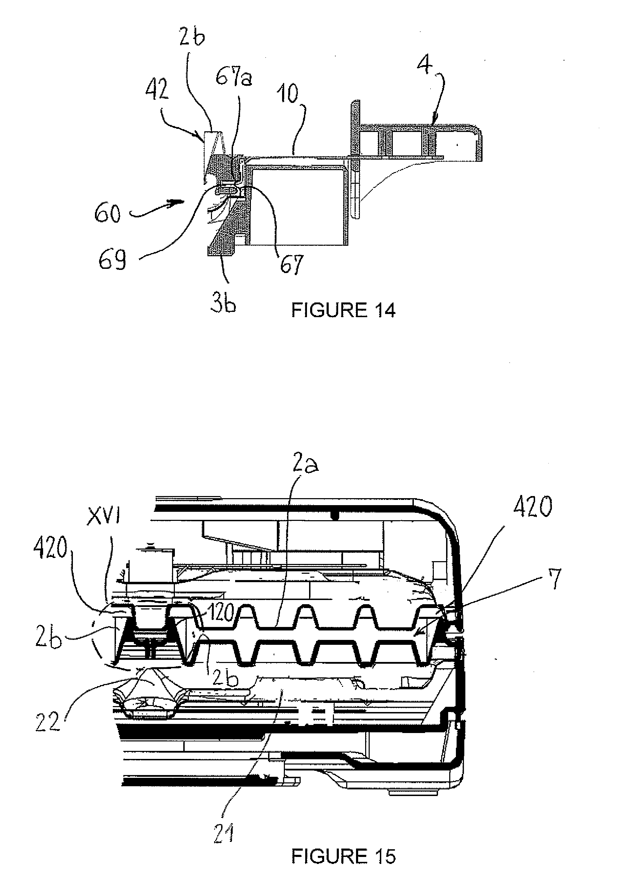

Figure 14, le dispositif de verrouillage libérable 60 comprend un ressort 67 déformable (par exemple une lame flexible) dont une excroissance 67a s'engage de façon libérable dans un creux 69, en position bloquée. Dans l'exemple préféré, le ressort 67 et son excroissance 67a sont prévus sur la poignée 4, le creux 69 sur la structure inférieure 3b. Plaque de chauffe inférieure 2b à plat, la poignée 4 est bloquée après qu'on ait forcé l'excroissance 67a dans le creux 69 (figure 14). Quand on la tire à nouveau vers le haut et qu'elle se place en position inclinée comme figure 13, la poignée se débloque dès lors qu'on a forcé l'excroissance 67a hors du creux.

Selon un autre mode de réalisation de l'invention représenté sur les figures 2 à 5, le manche 5' est un manche amovible de la plaque inférieure 2b. Ici il est amovible de la patte 10 et un dispositif de blocage 11 est établi entre le manche 5' et cette patte de façon à permettre le verrouillage et le déverrouillage du manche vis-à-vis de la patte.

Ceci peut permettre de personnaliser les manches (tailles ou formes différentes...) et de faire passer au lave-vaisselle les plaques, sans les manches qui peuvent ne pas le supporter.

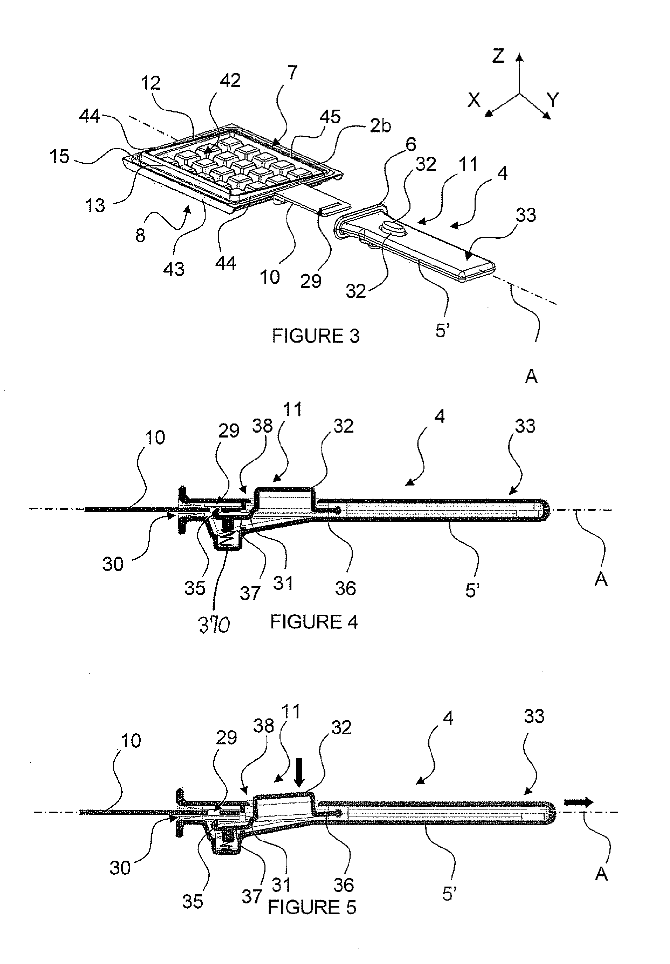

Les figures 2 et 3 montrent une réalisation où la plaque inférieure 2b est munie d'un manche amovible 5'. Le manche 5' peut comprendre une cavité 30 configurée pour permettre l'insertion de la patte 10. La patte 10 comprend une lumière 29. Le manche 5' comprend un dispositif de verrouillage 11 coopérant avec la patte 10, et plus précisément avec la lumière 29, de façon à permettre la fixation du manche 5' sur la patte et son détachement de celle-ci.

Le dispositif de verrouillage 11 peut comprendre un levier 31 lié, voire intégré au manche 5'. Le levier 31 comprend un premier bras 36 fixé au manche et relié à un bouton 32. Le bouton 32 fait saillie sur la face supérieure 33 du manche 5' en ressortant à travers un orifice 38 formé dans la face supérieure 33. Le levier 31 est actionnable en appuyant sur le bouton 32.

Le levier 31 comprend un deuxième bras 37 relié au bouton 32. Un ergot de verrouillage 35 est configuré pour s'insérer dans la lumière 29, et se dégager de celle-ci. L'ergot de verrouillage 35 et le deuxième bras 37 sont logés dans la cavité 30. Le levier 31 est mobile par rapport au manche 5' entre une position de verrouillage dans laquelle l'ergot de verrouillage 35 est inséré dans la lumière 29, et une position de déverrouillage dans laquelle l'ergot 35 est dégagé de la lumière.

Le levier 31 fonctionne comme une lame à rappel. L'ergot de verrouillage 35 a tendance à être ramené naturellement vers le haut (vers sa position de verrouillage) par effet ressort.

Pour cela, le dispositif de verrouillage 11 peut comprendre un ressort 370.

Lorsque le levier 31 est au repos (position de verrouillage), les premier 36 et deuxième bras 37 sont sensiblement parallèles à l'axe longitudinal A, comme fig.4. Lorsque le levier 31 est actionné par l'utilisateur au moyen du bouton 32 (position de déverrouillage), il est incliné par rapport à l'axe longitudinal A

Ainsi, lorsque l'utilisateur insert le manche amovible 5' dans la patte 10, l'ergot de verrouillage 35 du dispositif de verrouillage 11 vient s'insérer automatiquement dans la lumière 29 de la patte 10. Le manche 5' est alors fixé à la patte 10 de la plaque de chauffe inférieure 2b, comme représenté sur la figure 4.

Pour dégager le manche 5' de la patte 10, l'utilisateur doit d'abord déverrouiller le dispositif de verrouillage 11 en appuyant sur le bouton 32, comme représenté sur la figure 5. Ceci entraine l'inclinaison du levier 31, puis le dégagement de l'ergot de verrouillage 35 hors de la lumière 29 de la patte 10. L'utilisateur peut ensuite tirer sur le manche 5' pour l'extraire de la patte 10.

Ainsi, il est possible de réaliser un gain de place. Il est également possible de réduire le nombre de manches.

Comme représenté sur les figures 2 et 3, chaque plaque inférieure 2b peut présenter une face inférieure 8 et une face supérieure 7 comprenant une bordure périphérique supérieure 12. La bordure périphérique supérieure 12 délimite au moins partiellement la zone de cuisson 42.

La bordure périphérique supérieure 12 présente une partie de bordure plus haute 13 que le reste de la bordure périphérique supérieure 12. La partie de bordure plus haute 13 fait saillie sur la face supérieure 7 de la plaque inférieure 2b. La partie de bordure plus haute 13 peut présenter une hauteur comprise entre 2mm à 8mm.

Dans les exemples des figures 1 et 3, les plaques inférieure 2b présentent une forme générale carrée et comprennent quatre côtés droits dont un côté de jonction 43. Alternativement, la plaque inférieure 2b peut comprendre plusieurs côtés de jonction 43. Chaque côté de jonction 43 est destiné à être positionné au voisinage d'un autre côté de jonction 43 d'une autre plaque de chauffe inférieure 2b, lorsque les plaques de chauffe inférieures 2b sont posées sur la structure inférieure 3b. La partie de bordure plus haute 13 s'étend le long du côté de jonction 43 de la plaque inférieure 2b. Elle est parallèle à l'axe longitudinal A. Lorsque deux plaques de chauffe inférieures 2b sont posées sur la structure inférieure 3b, le côté de jonction 43 des deux plaques est positionné sensiblement au milieu de la structure inférieure 3b. Le côté de jonction 43 longe un axe central C perpendiculaire aux parois avant 18 et arrière 18' de la structure inférieure 3b. Lorsque deux plaques inférieures 2b sont posées sur la structure inférieure 3b, leurs côtés de jonction 43 respectifs sont contigus, et de préférence en contact.

La partie de bordure plus haute 13 permet d'éviter le débordement de l'aliment lors de la cuisson. Elle est particulièrement utile pour les appareils à gaufre car la pâte a tendance à gonfler lors de la cuisson et à déborder de la plaque de chauffe. La partie de bordure plus haute 13 permet d'éviter que de la pâte ne coule sur les éléments chauffants, ce qui provoquerait un dégagement de fumée très désagréable due à la carbonisation de la pâte, et des risques d'inflammation.

En variante, la bordure périphérique supérieure 12 peut présenter au moins une partie de bordure inclinée 44 ayant une surface supérieure qui est inclinée par rapport au plan moyen de la plaque inférieure 2b, c'est-à-dire au plan (X, Y). La surface supérieure de la partie de bordure inclinée 44 est inclinée par rapport à la surface supérieure de la partie de bordure plus haute 13 qui est sensiblement parallèle au plan moyen de la plaque inférieure 2b. La partie de bordure inclinée 44 présente une forme générale de cale. Dans l'exemple des figures 2 et 3, la bordure périphérique supérieure 12 présente deux parties de bordure inclinées 44 opposées, et perpendiculaires à la partie de bordure plus haute 13. Chaque partie de bordure inclinée 44 présente une hauteur qui augmente progressivement en direction de la partie de bordure plus haute 13, jusqu'à atteindre celle de la partie de bordure plus haute 13. Les parties de bordure inclinées 44 fournissent une protection complémentaire pour éviter le débordement de la pâte. Elles protègent les deux coins de la bordure périphérique supérieure 12 qui sont à proximité du bord de jonction 43.

La bordure périphérique supérieure 12 présente une partie de bordure moins haute 45, opposée à la partie de bordure plus haute 13, et perpendiculaire aux parties de bordure inclinées 44. La partie de bordure moins haute 45 présente une hauteur inférieure à celle de la partie de bordure plus haute 13, et une hauteur inférieure ou égale à celle de la partie de bordure inclinée 44. Chaque partie de bordure 13, 44, 45 longe un des côtés respectif de la plaque de chauffe inférieure 2b. Les parties de bordure 13, 44, 45 se rejoignent pour former la bordure périphérique supérieure 12 de la plaque de chauffe inférieure 2b.

Pour avoir une coupelle, ou plaque de chauffe, qui ne soit ni gauche ni droite , on peut aussi positionner le bord plus bas 45 sur l'arrière, côté opposé à la poignée.

Comme représenté sur la figure 1, les deux plaques inférieures 2b sont symétriques. Lorsqu'elles sont posées sur la structure inférieure 3b, leurs axes longitudinaux A respectifs sont parallèles à l'axe central C de la structure inférieure 3b. Les poignées 4 sont accessibles par la face avant de l'appareil de cuisson. Figure 3, les parties de bordure plus hautes 13 des plaques respectives sont contigües ou en contact. Elles forment une ligne de jonction qui est positionnée sensiblement au milieu de la structure inférieure 3b, et qui s'étend suivant l'axe central C.

L'invention ne se limite pas à un appareil de cuisson comprenant deux plaques de chauffe inférieures 2b.

Appareil fermé, cette/chaque partie de bordure plus haute 13 s'engage dans un creux 420 de la zone de cuisson 42 de la/des plaques de chauffe supérieur(s) ; cf. figure 8.

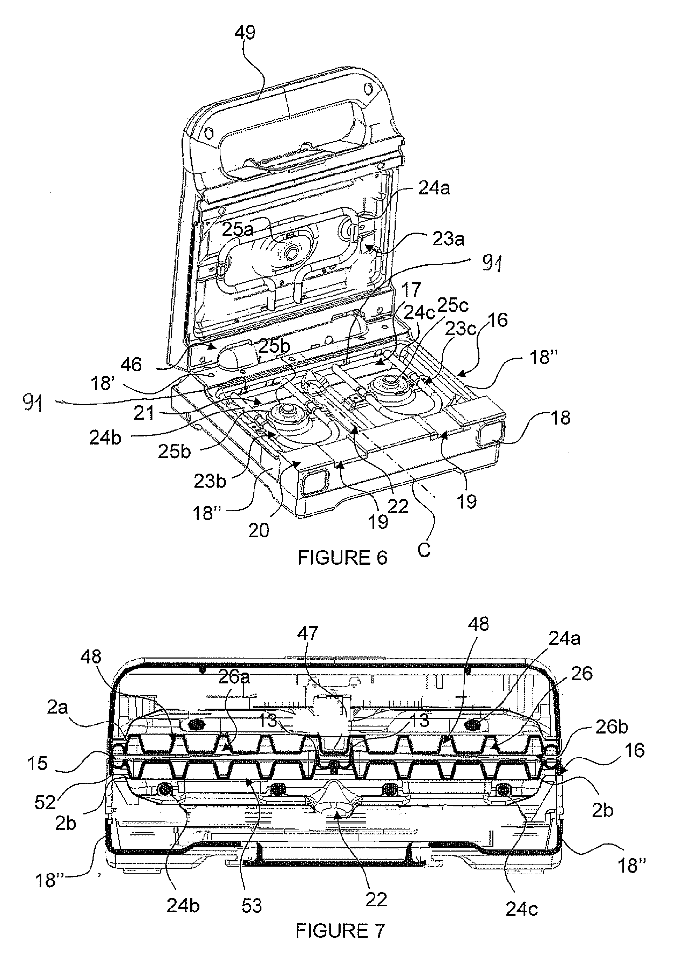

Selon un mode de réalisation possible, la bordure périphérique supérieure 12 de chaque plaque inférieure 2b est entourée par une rainure 15. La figure 6 représente une vue en perspective d'un appareil de cuisson en position ouverte, sans les plaques inférieure 2b et supérieure 2a, selon un mode de réalisation possible de l'invention.

Chaque plaque inférieure 2b est reçue dans une cavité 17 de la structure inférieure 3b. Pour cela, la structure peut comprendre une paroi avant 18, une paroi arrière 18' et deux parois latérales 18" opposées, délimitant la cavité. Dans la cavité est logé au moins un chauffage électrique 23a, 23b, 23c. Cela permet que le chauffage électrique 23a, 23b, 23c soit disposé à distance du bord 16 de la structure et donc d'éviter les brûlures quand il est encore chaud et que la plaque de chauffe ne se trouve plus dans la cavité 17. Cette dernière 17 permet également de sécuriser et d'éviter tout mouvement indésirable de la plaque de chauffe dans la cavité. De plus, le manche 5, 5' étant éloigné de la plaque de chauffe chaude et de la cavité (comprenant le chauffage électrique) on augmente encore la sécurité et la facilité de préhension. La cavité 17 s'étend ici en contrebas du bord 16. La structure inférieure 3b comprend un tel bord périphérique 16 formé au dessus desdites parois 18, 18' et 18". Le bord 16 entoure la cavité 17 de chauffe.

Chaque plaque inférieure 2b présente un bord périphérique inférieur sur sa face inférieure 8. Le bord périphérique inférieur est en appui sur le bord 16 lorsque la plaque 2b est supportée par la structure inférieure 3b.

Le bord périphérique supérieur 16 permet à l'utilisateur de poser directement les plaques inférieures 2b amovibles sur la structure inférieure 3b, et de les retirer directement de la structure inférieure 3b.

Selon une autre réalisation (non représentée), la cavité 17 pourrait former une empreinte ayant l'aspect d'une contre-forme de la face inférieure 8 de la plaque inférieure 2b. Cette face 8 reposerait alors sur l'empreinte.

Dans l'exemple de la figure 6, l'appareil de cuisson comprend une paroi avant 18 comportant deux logements 19 sur sa face supérieure 20, chaque logement 19 étant adapté à recevoir la patte de liaison 10 d'une des plaques de chauffe inférieure 2b. Plus précisément, le logement 19 reçoit la portion de patte 28 non recouverte par le manche 5, 5'. A chaque patte de liaison 10 d'une plaque de chauffe inférieure 2b correspond un logement 19. Avantageusement, le logement 19 reçoit entièrement la portion de patte 28 non recouverte par le manche 5, 5'. Ce logement 19 peut être de forme quelconque. Ce logement 19 présente une forme qui est la contre forme de celle de la portion de patte 28 non recouverte par le manche 5, 5'.

On comprend bien de ces modes de réalisation ci-dessus que le manche 5, 5' de la plaque de chauffe inférieure 2b s'étend au-delà la cavité lorsque la plaque de chauffe est dans la cavité 17. En particulier, lorsque la plaque de chauffe inférieure 2b se trouve dans la cavité 17, le manche 5, 5' s'étend au-delà des parois 18, 18', 18" notamment au-delà de la paroi avant 18.

Sur la figure 6, le logement 19 présente une section en U et une faible profondeur pour s'adapter à la forme de la portion de patte 28 non recouverte par le manche qui est parallélépipédique, et relativement plate.

Lorsque la plaque de chauffe inférieure 2b est supportée par la structure inférieure 3b, la portion de patte 28 non recouverte par le manche vient se loger dans le logement 19 de façon à former, sur le dessus de la paroi avant 18 de la structure inférieure 3b, une surface qui est sensiblement continue et plane, sans partie en saillie sur cette surface.

Ceci permet d'obtenir un appareil de cuisson relativement hermétique lorsque la structure supérieure 3a recouvre la structure inférieure 3b. La perte d'énergie thermique est limitée.

De préférence, la garde de protection 6 est en butée contre la paroi avant 18 de la structure inférieure 3b afin de limiter les pertes de chaleur par le logement 9. La garde de protection 6 présente une largeur suffisante pour permettre l'obturation du logement 9.

Lorsque les deux plaques de chauffe inférieures 2b sont supportées par la structure inférieure 3b, la cavité de chauffe 17 peut être entièrement obturée par les plaques de chauffe inférieures 2b.

La structure inférieure 3b comprend un fond 21 délimitant en partie la cavité de chauffe 17. Le fond 21 comporte une gorge de récupération 22. Le fond 21 sera avantageusement un déflecteur thermique. Il peut être en acier.

La gorge de récupération 22 forme un troisième dispositif de sécurité pour protéger les chauffages électriques en cas de débordement de pâte.

Le sous-ensemble chauffant supérieur 1a comprend un chauffage électrique 23a disposé entre la plaque 2a, et la structure 3a.

Le sous-ensemble inférieur 1b peut comprendre un ou plusieurs, tels deux chauffages électriques 23b, 23c. Le/chaque chauffage électriques est de préférence disposé dans la cavité de chauffe 17, entre la structure inférieure 3b et l'une des plaques de chauffe inférieures 2b, lorsque celle-ci est supportée par la structure inférieure 3b.

De préférence, le/chaque chauffage électrique comprend, ou est lié à, un thermostat 25a, 25b, 25c, soit un thermostat par chauffage électrique de façon à obtenir des chauffages électriques 23a, 23b, 23c indépendants. Les thermostats 25a, 25b, 25c sont positionnés sensiblement au centre des plaques de chauffe inférieures 2b, et sont en contact avec les plaques de chauffe.

De préférence, le/chaque électrique comprend un élément chauffant 24a, 24b, 24c, ici une résistance électrique. Ici chaque résistance est disposée autour d'un thermostat.

Ainsi, la température de chaque plaque de chauffe inférieure 2b peut être régulée de façon indépendante.

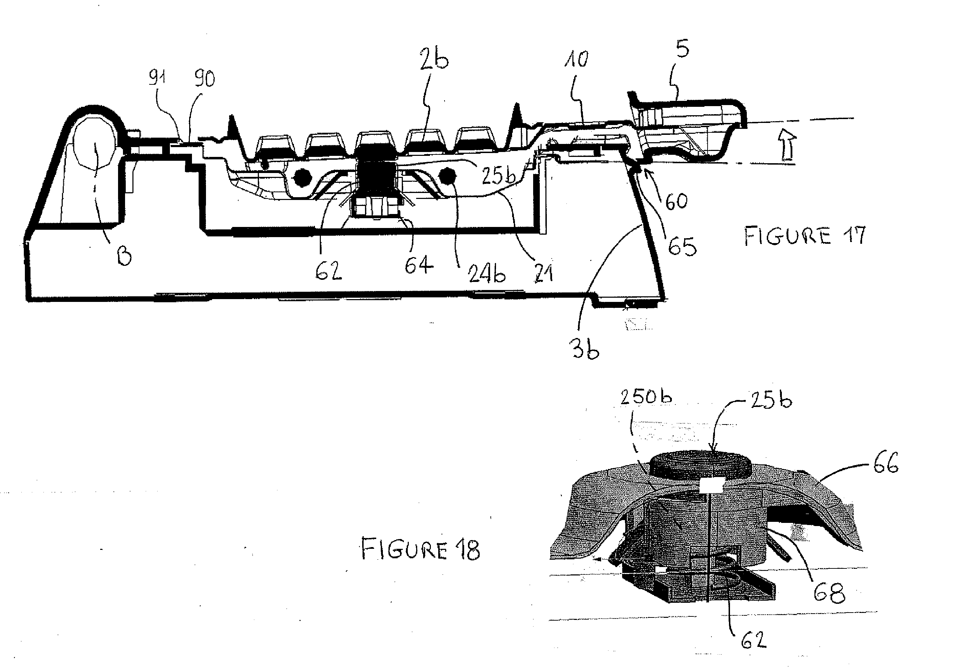

On conseille, pour sécuriser la qualité du chauffage et de la détection, à coût réduit :
- que les éléments chauffants 24a,24b,24c soient disposés à proximité des thermostats et soient donc adaptés à chauffer les plaques de chauffe supérieure et inférieures,
- et que l'un au moins de ces thermostats, tel 25b (figure 18), soit soumis à l'action d'un poussoir 62 qui l'applique contre l'une des plaques de chauffe inférieures, ici 2b, dans l'état opérationnel de cette plaque, c'est-à-dire lorsqu'elle est verrouillée sur la structure qui la porte, ici 3b. A l'arrière (dessous) le poussoir est en appui, en 64, comme on le voit figure 17 où la gâchette 61 est débloquée vis-à-vis de la patte de retenue 65 et où le thermostat 25b en cause est donc écarté (du dessous) de la plaque 2b en regard. En 66, on voit la plaque réflectrice qui s'étend entre chaque plaque de chauffe et l'élément chauffant 24a... en cause et à laquelle le corps 68 du poussoir 62 est ici fixé, par-dessous.

Chaque thermostat 25a, 25b, 25c comprend des moyens de détection, tels 250b (figure 18), aptes à détecter l'absence d'une plaque inférieure 2b. Lorsque la plaque inférieure 2b est retirée, le thermostat 25a, 25b, 25c détecte une chute de température. L'élément chauffant 24a, 24b, 24c associé est alors arrêté automatiquement sans perturber la régulation en température de l'autre plaque de chauffe inférieure 2b qui reste en place sur l'structure inférieure 3b.

La plaque de chauffe supérieure 2a du sous-ensemble chauffant supérieur 1a peut être fixée à la structure supérieure 3a de façon permanente ou non permanente. Elle peut être amovible de façon à être facilement retirée du sous-ensemble chauffant supérieur 1a pour son nettoyage.

La plaque de chauffe supérieure 2a est divisée en deux sous parties de plaque 48. Chaque sous partie de plaque 48 comprend une empreinte, et est associée à une des plaques de chauffe inférieures 2b.

En variante, la plaque de chauffe supérieure 2a peut comprendre deux sous plaques de chauffe indépendantes et non liées entres elles (non représenté).

Comme représenté sur les figures 1, 7 et 8, la plaque supérieure 2a comprend une partie ou cloison 47 séparant les deux sous parties de plaques 48, et faisant saillie sur la plaque de chauffe supérieure 2a. La partie ou cloison 47, qui peut être centrale, s'étend depuis le bord avant jusqu'au bord arrière de la plaque de chauffe supérieure 2a. Cette partie centrale 47 est ici disposée au milieu de la plaque supérieure 2a de façon à obtenir deux sous parties de plaques 48 symétriques.

La plaque supérieure 2a est délimitée par une bordure périphérique 12'. Cette bordure périphérique 12' et la partie centrale 47 de la plaque de chauffe supérieure 2a délimitent les deux sous parties de plaque 48. La chambre de cuisson 26 se divise donc en deux sous chambres de cuisson 26a, 26b. Chaque sous partie de plaque 48 de la plaque de chauffe supérieure 2a définit, avec une plaque de chauffe inférieure 2b, une sous chambre de cuisson 26a, 26b.

Le sous-ensemble chauffant supérieur 1a peut comprendre une poignée 49, comme représentée sur les figures 1 et 6. Cette poignée permet d'ouvrir et de fermer l'appareil de cuisson.

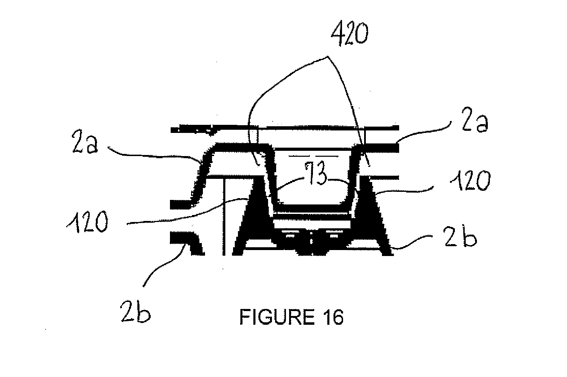

Figures 11, 15, on voit que la face supérieure 7 de chaque plaque de chauffe inférieure 2b présente une bordure périphérique 120 dressée. Sur au moins les côtés (ici les trois côtés) autres que celui 122 (ici frontal) auquel la poignée 4 se raccorde, cette bordure périphérique 120 s'engage (de préférence continument) à l'intérieur de creux 420 de la (ou respectivement des) plaque(s) de chauffe supérieure(s) 2a. Figures 15, 16, on constate que ceci est vrai dans une position fermée de l'appareil de cuisson dans laquelle ledit côté 122 (figure 11) de chaque plaque de chauffe inférieure 2b (auquel la poignée est donc raccordée) reçoit alors une partie de la bordure périphérique 12' de la (chaque) plaque de chauffe supérieure 2a. Ainsi, on va assurer une étanchéité vis-à-vis d'un aliment placé dans l'une au moins de ces plaques de chauffe inférieures 2b.

La partie 12a de la bordure périphérique (ici continue) 12' (figure 1) est la partie frontale de cette bordure qui s'étend continument le long du côté 122 précité, de façon immédiatement adjacente à lui, en position fermée de l'appareil de cuisson.

Figure 11, on voit encore que chaque plaque de chauffe inférieure 2b présente une face supérieure 7 où une zone de cuisson 42 est entourée par une bordure périphérique 12. Cette bordure périphérique 12 se dresse au-dessus du niveau de la zone 42 de cuisson, ceci sur les côtés (ici les trois côtés) autres que celui 122 auquel la poignée 4 se raccorde. Sur ce côté 122, la bordure 12 se prolonge par des amorces 71a, 71b latérales de parois dressées. Dans une position fermée de l'appareil (figure 15), on va ainsi définir des chicanes 73 (figure 16), en liaison avec une partie au moins d'une (de la) bordure périphérique 12' de la (chaque) plaque de chauffe supérieure 2a et/ou d'une (de la) cloison saillante 47 qui sépare en sous-parties cette plaque de chauffe supérieure 2a, de sorte à assurer alors une étanchéité vis-à-vis de l'aliment placé dans la zone de cuisson 42 (figures 1, 11, 15, 16). Figure 11, on voit que frontalement, entre des amorces 71a, 71b latérales de parois dressées, la plaque de chauffe inférieure 2b illustrée est ouverte en 75, jusque sensiblement au niveau de la zone 42 de cuisson. Dans l'exemple, ce niveau est celui du sommet des plots 77 qui forment un quadrillage sur la face 7, que l'on retrouve sur chaque plaque de chauffe inférieure 2b et en face inférieure de la plaque de chauffe supérieure 2a.

Entre les plots 77, les creux 79 servent de réceptacle à aliment, tel une pâte à gaufre.

Figures 2,6,17 réunies on notera encore que la plaque inférieure 2b peut présenter, vers l'opposé de la poignée 4, au moins un (ici deux) ergots 90 qui s'engage dans au moins une fente 91 de la structure inférieure 3b et qui produit un effet charnière quand, verrou libéré (tel 60), le dispositif d'éjection écarte cette plaque de chauffe de la structure inférieure, la plaque se positionnant alors de biais ; voir flèche fig.17.

Dans la description qui précède, on doit que les variantes de réalisation et les caractéristiques présentées peuvent se combiner en tout ou partie.

En outre, plusieurs caractéristiques peuvent individuellement constituer un moyen original a priori innovant, en particulier :
- un appareil de cuisson comprenant un sous-ensemble chauffant supérieur (1a), et un sous-ensemble inférieur (1b) articulés l'un par rapport à l'autre entre une position ouverte, et une position fermée, le sous-ensemble inférieur (1b) comprenant une structure inférieure (3b) et au moins deux plaques de chauffe inférieures (2b) amovibles, le sous-ensemble chauffant supérieur 1a comprenant une structure supérieure (3a) et au moins une plaque de chauffe supérieure (2a), **caractérisé en ce que** chaque plaque de chauffe inférieure (2b) présente une face supérieure (7) comprenant une bordure périphérique (12) présentant au moins une partie de bordure plus haute (13) que le reste de la bordure, ladite partie de bordure plus haute (13) s'étendant le long d'un côté de jonction (43) de la plaque de chauffe inférieure (2b), ledit côté de jonction (43) étant le côté de la plaque de chauffe inférieure (2b) qui est destiné à être positionné au voisinage d'un autre côté de jonction (43) de l'autre ou d'une autre dite plaque de chauffe inférieure (2b), lorsque les plaques de chauffe inférieures (2b) sont posées sur la structure inférieure,
- un appareil de cuisson comprenant un sous-ensemble chauffant supérieur (1a), et un sous-ensemble inférieur (1b) articulés l'un par rapport à l'autre entre une position ouverte, et une position fermée, le sous-ensemble inférieur (1b) comprenant une structure inférieure (3b) et au moins deux plaques de chauffe inférieures (2b) amovibles, le sous-ensemble chauffant supérieur (1a) comprenant une structure supérieure (3a) et au moins une plaque de chauffe supérieure (2a), **caractérisé en ce que** chaque plaque de chauffe inférieure (2b) présente une face supérieure (7) comprenant une bordure périphérique (12) qui, sur au moins les côtés autres que celui auquel la poignée se raccorde, s'engage à l'intérieur de creux de la (des) plaque(s) de chauffe supérieure(s)(2a), dans une position fermée de l'appareil de cuisson dans laquelle ledit côté de chaque plaque de chauffe inférieure (2b) auquel la poignée se raccorde reçoit alors une partie d'une bordure périphérique (12') de la (chaque) plaque de chauffe supérieure (2a).

Dans les deux cas, on assurera ainsi une étanchéité vis-à-vis d'un aliment placé dans l'une au moins des plaques de chauffe inférieures.

## Revendications

1. Appareil de cuisson comprenant des sous-ensembles respectivement inférieur et supérieur et comprenant respectivement :
- une structure inférieure (3b) et au moins une plaque de chauffe inférieure (2b) qui en est amovible, la plaque de chauffe inférieure étant liée à une poignée (4) comprenant un manche (5, 5') en un matériau isolant thermique,
- une structure supérieure (3a) et une plaque de chauffe supérieure (2a) fixée à elle,
- une chambre de cuisson pour l'aliment (26) définie entre les plaques de chauffe supérieure et inférieure, **caractérisé en ce que** la structure inférieure (3b) comprend une cavité (17) qui reçoit ladite plaque de chauffe inférieure (2b) et au-delà de laquelle s'étend le manche (5, 5') lorsque la plaque de chauffe (2b) est dans la cavité (17).

2. Appareil de cuisson selon la revendication 1, **caractérisé en ce que** la cavité (17) est délimitée par des parois au-delà desquelles s'étend la poignée lorsque la plaque de chauffe est dans la cavité (17).

3. Appareil de cuisson selon la revendication 2, **caractérisé en ce que** les parois présentent une paroi avant (18), une paroi arrière (18') et deux parois latérales (18") opposées, la structure inférieure (2b) présentant une bord périphérique (16) formé au-dessus desdites parois (18, 18', 18").

4. Appareil de cuisson selon la revendication 1, **caractérisé en ce que** la plaque de chauffe inférieure (2b) s'étend globalement dans un plan et la poignée (4) est droite et s'étend sensiblement dans ledit plan, perpendiculairement à la direction de l'articulation entre lesdites sous-ensembles(1a,1b).

5. Appareil de cuisson selon la revendication 1, **caractérisé en ce que** la plaque de chauffe inférieure (2b) s'étend globalement dans un plan et la projection de la poignée (4) dans ce plan est allongée dans une direction suivant laquelle on s'éloigne de la plaque au fur et à mesure qu'on se rapproche de l'extrémité libre de cette poignée.

6. Appareil de cuisson selon l'une des revendications 1 à 5, **caractérisé en ce que** chaque poignée (4) comprend une patte de liaison (10) reliant de façon monobloc le manche (5, 5') à la plaque de chauffe inférieure (2b), la patte de liaison (10) s'étendant sensiblement dans le plan de la plaque de chauffe inférieure (2b).

7. Appareil de cuisson selon les revendications 1 à 6, **caractérisé en ce que** la paroi avant (18) comporte deux logements (19) sur sa face supérieure (20), chaque logement (19) étant adapté à recevoir la patte de liaison (10) d'une des plaques de chauffe inférieure (2b).

8. Appareil de cuisson selon l'une des revendications 1 à 7, **caractérisé en ce que** la poignée (4) comprend un dispositif (60) de verrouillage libérable coopérant avec la structure inférieure (3b) pour y immobiliser la plaque de chauffe inférieure (2b).

9. Appareil de cuisson selon la revendication 6, **caractérisé en ce que** le manche (5') est amovible de la patte de liaison (10) de la plaque de chauffe inférieure (2b) et comprend un dispositif de verrouillage (11) coopérant avec ladite patte de liaison (10) de façon à permettre le verrouillage du manche (5') sur la patte de liaison (10), et son déverrouillage.

10. Appareil de cuisson selon la revendication 9, **caractérisé en ce qu'il** comprend un dispositif d'éjection de l'une au moins des plaques de chauffe inférieures (2b), adapté à écarter cette plaques de chauffe inférieure (2b) de la structure inférieure (3b), adapté à écarter cette plaque de chauffe de la structure inférieure (3b), lorsque le dispositif (11) de verrouillage est libéré.

11. Appareil de cuisson selon l'une des revendications 1 à 10, **caractérisé en ce que** les sous-ensembles respectivement inférieur et supérieur sont articulés ensemble entre une position fermée où ladite chambre de cuisson (26) est fermée, et une position ouverte dans laquelle ils offrent une ouverture vers le haut à partir du sous-ensemble inférieur par où la où les plaques de chauffe inférieures (2b) peuvent être retirées de l'appareil en étant soulevées et introduites dans celui-ci en étant abaissées vers ledit sous-ensemble inférieur.
